# EUROPEAN PATENT APPLICATION

(11) **EP 4 683 278 A1**
(43) Date of publication of application: **21.01.2026**
(21) Application number: 24784112.5
(22) Date of filing: 26.03.2024
(51) Int. Cl.: H04L 27/26

(54) **COMMUNICATION METHOD, NETWORK DEVICE, TERMINAL DEVICE AND COMMUNICATION SYSTEM**

(30) Priority: 07.04.2023 CN 202310401610
(71) Applicant: HUAWEI TECHNOLOGIES CO., LTD., Shenzhen, Guangdong 518129 (CN)
(72) Inventor: QU, Weilin, Shenzhen, Guangdong 518129 (CN); LUO, Zhihu, Shenzhen, Guangdong 518129 (CN)
(74) Representative: Maiwald GmbH
(86) International application number: PCT/CN2024/083847
(87) International publication number: WO 2024/208027

(57) **Abstract**

Embodiments of this application are applicable to the field of communication technologies, and provide a communication method, a network device, a terminal device, and a communication system. The method includes: A network device sends a generated M-bit OOK signal to a terminal device, where M indicates a quantity of OOK symbols carried in each OFDM symbol, a level in time T at an end of each OFDM symbol is the same as a level of a 1^{st} OOK symbol in each OFDM symbol, duration of the 1^{st} OOK symbol is the time T shorter than duration of another OOK symbol in each OFDM symbol, the OFDM symbol includes a first cyclic prefix or a second cyclic prefix, and the first cyclic prefix is shorter than the second cyclic prefix. According to this method, in a process of demodulating the OOK signal by the terminal device, no additional time offset is introduced due to cyclic prefixes with different lengths, so that demodulation performance of the OOK signal can be ensured.

## Description

This application claims priority to Chinese Patent Application No. 202310401610.1, filed with the China National Intellectual Property Administration on April 7, 2023 and entitled "COMMUNICATION METHOD, NETWORK DEVICE, TERMINAL DEVICE, AND COMMUNICATION SYSTEM", which is incorporated herein by reference in its entirety.

### TECHNICAL FIELD

Embodiments of this application relate to the field of communication technologies, and in particular, to a communication method, a network device, a terminal device, and a communication system.

### BACKGROUND

As a 5th generation (5th generation 5G) new radio (new radio, NR) access technology is increasingly widely applied in machine-type communication (machine-type communication, MTC) and internet of things (internet of things, IoT) communication, a quantity of connections of IoT devices increases day by day. Therefore, the industry has an increasingly strong demand for reducing costs and power consumption of the IoT devices. In a conventional NR or long term evolution (long term evolution, LTE) network or an IEEE 802.11a/g/n/ac/ax network, a multicarrier orthogonal frequency division multiplexing (orthogonal frequency division multiplexing, OFDM) transmission system is used, and a receiver that receives OFDM needs to consume power of dozens to hundreds of milliwatts (mW). In the 4th generation mobile communication technology (4th generation mobile communication technology, 4G) era, a narrowband internet of things (narrowband IoT, NB-IoT) system is introduced into the 3rd generation partnership project (3rd generation partnership project, 3GPP). In the system, a terminal device may be allowed to transmit data via a single subcarrier, and in the NB-IoT system, a wake-up signal (wake-up signal, WUS) is supported, in other words, the terminal device may wake up only based on a received wake-up signal indication from a network device, to receive data information from the network device. In this manner, the terminal device may be in a sleep state for longer time, and does not need to frequently wake up and listen to a message such as paging, to further reduce power consumption of the terminal device, and further save energy for the terminal device. However, even if the foregoing technology can be used to reduce power consumption of an NB-IoT device, a receiver of the NB-IoT terminal device is still an OFDM signal receiver. Power consumption reduction of this type of receiver has reached a bottleneck, and consequently power consumption cannot be further reduced.

The IEEE 802.11 working group started to discuss related content of a wake-up receiver (wake-up receiver, WUR) in 2017, to determine that an IEEE WUR standard is IEEE 802.11ba, and enable power consumption of receiving a signal by a receiver to be less than 1 mW. The terminal device has two receiver links, that is, a primary receiver and a secondary receiver. The primary receiver is similar to a receiver of a conventional cellular terminal device, and an OFDM signal receiver may still be used. The secondary receiver is a WUR receiver whose power consumption needs to be designed to be less than 1 mW. The network device sends, to the secondary receiver, a WUS signal modulated through amplitude shift keying (amplitude shift keying, ASK)/on-off keying (on-off keying, OOK) or frequency shift keying (frequency shift keying, FSK) in an ON/OFF waveform in time domain. Unlike a conventional cellular OFDM signal receiver that performs coherent demodulation on a signal generated by a high-frequency local oscillator, the secondary receiver performs non-coherent demodulation on the received signal through an envelope detector (envelope detector, ED) after receiving the signal. Because the secondary receiver does not need to generate a high-frequency local oscillator signal, power consumption of the WUR receiver can be greatly reduced to an order of magnitude of tens to hundreds of microwatts (uW), which is far less than an order of magnitude of tens to hundreds of mW of an NB-IoT receiver. After the secondary receiver successfully demodulates, through envelope detection, data information that matches the terminal device, the primary receiver wakes up, and then performs other information transmission.

Research and discussion on a WUR receiver structure and a WUS signal design have been started in the NR 3GPP Release 18. In the discussion of the 3GPP R18, a WUS signal may carry all messages and some messages of original NR downlink paging (Paging), or only be used to wake up the terminal device, and the woken-up terminal device starts to receive a paging message. In a conventional NR paging scenario, a paging message carries a device identifier (user equipment identity document, UE ID) of 48 bits (bit). Typically, the paging message carries eight UE IDs. Minimum duration of each paging frame is 10 milliseconds (ms), and each paging frame includes a maximum of four paging opportunities. Therefore, in a typical NR network, a paging rate is 48 bits*4*8/10 ms=153.6 kbps (kbps). Certainly, if the paging message carries fewer UE IDs, a network paging rate may be further reduced, but is basically within an order of magnitude of 10 kbps to 100 kbps.

For the WUS signal design, the industry proposes a research based on sending a downlink WUS signal to the terminal device in an NR OFDM system, that is, generating, by the

NR OFDM system, a WUS signal modulated through ASK/OOK.

### SUMMARY

Embodiments of this application provide a communication method, a network device, a terminal device, and a communication system, to provide an OOK signal that can be used for a WUS.

To achieve the foregoing objectives, the following technical solutions are used in embodiments of this application.

According to a first aspect, a communication method is provided. The communication method may be applied to a network device, or may be applied to a chip in a network device. The communication method may include the following steps: generating an M-bit OOK signal, and sending the OOK signal to a terminal device. Herein, M indicates a quantity of OOK symbols carried in each OFDM symbol, the OOK signal includes a plurality of OOK symbols, a level in time T at an end of each OFDM symbol is the same as a level of a 1^{st} OOK symbol in each OFDM symbol, duration of the 1^{st} OOK symbol is the time T shorter than duration of another OOK symbol in each OFDM symbol, the time T is shorter than the duration of the another OOK symbol, each OFDM symbol includes a first cyclic prefix or a second cyclic prefix, and the first cyclic prefix is shorter than a second cyclic prefix. In this way, when the terminal device receives the OOK signal sent by the network device, regardless of whether a cyclic prefix included in each OFDM symbol in the OOK signal is a first cyclic prefix with a short length or a second cyclic prefix with a long length, the terminal device may remove the cyclic prefix of each OFDM symbol from the OOK signal based on the first cyclic prefix, and then demodulate the OOK signal from which the cyclic prefix is removed. According to the communication method provided in this embodiment of this application, a WUS receiver in the terminal device does not need to know whether a start OFDM symbol of the received OOK signal is an OFDM symbol including a first cyclic prefix with a short length or an OFDM symbol including a second cyclic prefix with a long length, and may remove a time domain sampling point at a beginning of each OFDM symbol uniformly based on the length of the first cyclic prefix. According to this method, performance of demodulating the OOK signal by the terminal device is not reduced, and no additional time offset is introduced in a process of demodulating the OOK signal due to cyclic prefixes with different lengths, so that demodulation performance of the OOK signal can be ensured.

In a possible implementation of the first aspect, the time T may be X times a difference between duration of the second cyclic prefix and duration of the first cyclic prefix, and a value of X is an integer greater than or equal to 0. By using this method, the time T at the end is equal to X times CP 2-CP 1 time, so that the terminal device only needs to perform removing based on a short cyclic prefix defined in an existing NR system. Therefore, removing a cyclic prefix by the terminal device with low complexity is implemented, and no additional time offset is introduced during demodulation, to ensure demodulation performance of the OOK signal.

In a possible implementation of the first aspect, when the network device generates the OOK signal, and when the OFDM symbol including the second cyclic prefix is a start OFDM symbol of the OOK signal, X=1, or when the OFDM symbol including the first cyclic prefix is a start OFDM symbol of the OOK signal, X=0. Herein, X=0 indicates that there is no level in the time T at the end of the OFDM symbol, and the duration of the 1^{st} OOK symbol in each OFDM symbol is the same as the duration of the another OOK symbol in the OFDM symbol. According to this method, whether the CP 2-CP 1 time needs to be accumulated in the time T at an end of a sent signal is determined based on whether a cyclic prefix of a start OFDM symbol is a long cyclic prefix. For the start OFDM symbol, if the cyclic prefix is a long cyclic prefix, the CP 2-CP 1 time starts to be accumulated in the time T at the end, or if the cyclic prefix is a short cyclic prefix, no accumulation is required at the beginning. In this manner, the sent signal is effectively and adaptively designed based on actual time domain allocation, and no additional time offset is introduced during demodulation, to ensure demodulation performance of the OOK signal.

In a possible implementation of the first aspect, when the network device generates the OOK signal, and when the OFDM symbol is a (1+k*7*2^{u})^{th} OFDM symbol, X is equal to X plus k for the start OFDM symbol of the OOK signal, where k is a positive integer; and when a subcarrier spacing corresponding to the OFDM symbol is 15 kHz, µ=0, or when a subcarrier spacing corresponding to the OFDM symbol is 30 kHz, µ=1. According to this method, each an OFDM symbol with a long cyclic prefix has additional CP 2-CP 1 accumulated in the time T at an end, so that a receiving end is enabled to remove a cyclic prefix only based on a short cyclic prefix, and no additional time offset is introduced, to ensure demodulation performance of the OOK signal.

In a possible implementation of the first aspect, the OOK signal may be generated in a discrete Fourier transform-spread-orthogonal frequency division multiplexing DFT-S-OFDM manner. When the network device generates the OOK signal in the DFT-S-OFDM manner, a sequence length occupied by the OOK signal is N, and N indicates that a bandwidth occupied by the OOK signal is N resource elements REs. A sequence length occupied by the 1^{st} OOK symbol in each OFDM symbol is N/M-L, a sequence length occupied by the another OOK symbol in each OFDM symbol is N/M, and a sequence length occupied by a symbol at the end of each OFDM symbol is L. According to this method, for a DFT-S-OFDM signal generation process, an input sequence before DFT is adaptively adjusted with a waveform change, to ensure that a target OOK signal waveform is generated in a relatively simplified manner.

In a possible implementation of the first aspect, a value of L is equal to a ratio of X times the difference between the duration of the second cyclic prefix and the duration of the first cyclic prefix to duration of an OFDM symbol without a cyclic prefix multiplied by the sequence length N occupied by the OOK signal. In a possible implementation of the first aspect, an element of the length L at the end of each OFDM symbol is the same as an element of a length L in another OOK symbol that has a same level as the 1^{st} OOK symbol in each OFDM symbol. It should be understood that the element of the length L in the another OOK symbol that has a same level as the 1^{st} OOK symbol in each OFDM symbol may be an element of any length L in the another OOK symbol.

According to the foregoing method, a simple manner of determining a DFT input sequence simplifies computing complexity of generating the OOK signal by the network device.

According to a second aspect, a communication method is provided. The communication method may be applied to a terminal device, or may be applied to a chip in a terminal device. The communication method may include the following steps: A terminal device receives an M-bit OOK signal sent by a network device, where M indicates a quantity of OOK symbols carried in each OFDM symbol, the OOK signal includes a plurality of OOK symbols, a level in time T at an end of each OFDM symbol is the same as a level of a 1^{st} OOK symbol in each OFDM symbol, duration of the 1^{st} OOK symbol is the time T shorter than duration of another OOK symbol in each OFDM symbol, the time T is shorter than the duration of the another OOK symbol, each OFDM symbol includes a first cyclic prefix or a second cyclic prefix, and the first cyclic prefix is shorter than the second cyclic prefix. The terminal device removes a cyclic prefix of each OFDM symbol from the OOK signal based on the first cyclic prefix. Then, the terminal device demodulates the OOK signal from which the cyclic prefix is removed. According to this method, the terminal device may remove a time domain sampling point at a beginning of each OFDM symbol uniformly based on a length of the first cyclic prefix, and no additional time offset is introduced in a process of demodulating the OOK signal by the terminal device due to cyclic prefixes with different lengths, so that demodulation performance of the OOK signal can be ensured.

In a possible implementation of the second aspect, the time T may be X times a difference between duration of the second cyclic prefix and duration of the first cyclic prefix, and a value of X is an integer greater than or equal to 0.

In a possible implementation of the second aspect, the end of each OFDM symbol in the OOK signal received by the terminal device includes an element of a length L, and a value of L is equal to a ratio of the X times the difference between the duration of the second cyclic prefix and the duration of the first cyclic prefix to duration of an OFDM symbol without a cyclic prefix multiplied by a sequence length N occupied by the OOK signal.

In a possible implementation of the second aspect, the element of the length L at the end of each OFDM symbol is the same as an element of a length L in another OOK symbol that has a same level as the 1^{st} OOK symbol in each OFDM symbol.

A third aspect provides a communication method. The communication method may be applied to a network device, or may be applied to a chip in a network device. The communication method may include the following steps: A network device determines a cyclic prefix type of an OFDM symbol in an OOK signal according to a predefined rule, where the cyclic prefix type includes a first cyclic prefix or a second cyclic prefix, and the first cyclic prefix is shorter than the second cyclic prefix. The network device generates an M-bit OOK signal based on the cyclic prefix type, where M indicates a quantity of OOK symbols carried in each OFDM symbol, and the OOK signal includes a plurality of OOK symbols. The network device sends the OOK signal to a terminal device. According to this method, when generating the OOK signal, the network device may determine, in a predefined manner, whether a long second cyclic prefix or a short first cyclic prefix is used for the cyclic prefix of the OFDM symbol in the OOK signal. The foregoing predefined rule may be written into a protocol. In this way, when receiving the OOK signal, the terminal device may determine, according to the predefined rule, whether the cyclic prefix of the OFDM symbol in the OOK signal is a long second cyclic prefix or a short first cyclic prefix. The terminal device may accurately remove the cyclic prefix of the OFDM symbol. According to this method, the cyclic prefix type of the OFDM symbol in the OOK signal is defined in the predefined manner. During demodulation, a terminal side obtains cyclic prefix types of all OFDM symbols according to the predefined rule, the terminal side can accurately remove cyclic prefixes with different lengths, and no additional time offset is introduced during demodulation, to ensure demodulation performance of the OOK signal.

In a possible implementation of the third aspect, the network device may determine, according to the predefined rule, an index of a start OFDM symbol in the OOK signal in a subframe or a slot in which the start OFDM symbol is located. The terminal device determines a cyclic prefix type of the start OFDM symbol based on the index, and by analogy, and determines a cyclic prefix type of another subsequent OFDM symbol. This effectively reduces predefined overheads, and can accurately remove different cyclic prefixes during demodulation, so that no additional time deviation is introduced during demodulation.

In a possible implementation of the third aspect, the OOK signal generated by the network device includes a plurality of types of OOK signals. For example, the plurality of types of OOK signals may include a periodically sent synchronization signal, a periodically sent broadcast signal, an aperiodically sent synchronization signal, and/or a data signal. The data signal may include a wake-up signal that carries all or a part of paging content messages, a signal that carries wake-up information, another physical downlink shared channel PDSCH, or the like. According to this method, a time interval between the plurality of types of OOK signals is defined in the predefined manner. During demodulation, the terminal side implicitly obtains cyclic prefix types of all OFDM symbols in the plurality of types of OOK signals, the terminal side can accurately remove cyclic prefixes with different lengths, and no additional time offset is introduced during demodulation, to ensure demodulation performance of the plurality of types of OOK signals.

In a possible implementation of the third aspect, that a network device determines a cyclic prefix type of an OFDM symbol in an OOK signal according to a predefined rule may include: determining the time interval between the plurality of types of OOK signals according to the predefined rule. A cyclic prefix type of each OFDM symbol in the OOK signal may also be determined by predefining a time interval between the OOK signals.

In an example, the time interval between the OOK signals may be a time interval between a last OFDM symbol of a first type of OOK signal and a start OFDM symbol of a second type of OOK signal, and the first type of OOK signal and the second type of OOK signal may be two of the plurality of types of OOK signals.

For example, the time interval may be a time interval between the periodically sent synchronization signal and the aperiodically sent synchronization signal, or may be a time interval between the aperiodically sent synchronization signal and the data signal.

In a possible implementation of the third aspect, the time interval between the OOK signals may be represented by a quantity of OFDM symbols. The cyclic prefix type of each OFDM symbol in the OOK signal may also be determined by predefining a quantity of OFDM symbols between the OOK signals.

In a possible implementation of the third aspect, the network device may determine, according to the predefined rule, that a symbol boundary of the start OFDM symbol in the OOK signal is aligned with a boundary of a slot or a subframe in which a start position of the OOK signal is located; or determine, according to the predefined rule, a time interval between a symbol boundary of the start OFDM symbol in the OOK signal and a boundary of a slot or a subframe in which a start position of the OOK signal is located. In this way, it may be implicitly determined whether a cyclic prefix used by the start OFDM symbol in the OOK signal is a long second cyclic prefix or a short first cyclic prefix. After the cyclic prefix type of the start OFDM symbol in the OOK signal is determined, the cyclic prefix type of the another subsequent OFDM symbol can also be determined. The terminal device may accurately remove a cyclic prefix of each OFDM symbol based on the determined cyclic prefix type used by the OFDM symbol, and then demodulate the OOK signal from which the cyclic prefix is removed. According to this method, the time interval between the plurality of types of OOK signals is defined through predefining and based on a time interval for the boundary of the subframe or the slot, and a protocol definition is simple.

According to a fourth aspect, a communication method is provided. The communication method may be applied to a terminal device, or may be applied to a chip in a terminal device. The communication method may include the following steps: A terminal device receives an M-bit OOK signal sent by a network device, where M indicates a quantity of OOK symbols carried in each OFDM symbol, and the OOK signal includes a plurality of OOK symbols. The terminal device determines a cyclic prefix type of the OFDM symbol according to a predefined rule, where each OFDM symbol includes a first cyclic prefix or a second cyclic prefix, and the first cyclic prefix is shorter than the second cyclic prefix. The terminal device removes a cyclic prefix of each OFDM symbol from the OOK signal based on the determined cyclic prefix type. Then, the terminal device demodulates the OOK signal from which the cyclic prefix is removed. According to this method, when generating the OOK signal, the network device may determine the cyclic prefix type of the OFDM symbol in the OOK signal according to the predefined rule, and generate the OOK signal based on the determined cyclic prefix type. When receiving the OOK signal sent by the network device, the terminal device may also determine a cyclic prefix type of each OFDM symbol in the received OOK signal according to the predefined rule. Then, the terminal device may accurately remove the cyclic prefix of each OFDM symbol, and demodulate the OOK signal from which the cyclic prefix is removed. In this way, when the terminal device demodulates the OOK signal, no additional time offset is introduced due to cyclic prefixes with different lengths, so that demodulation performance of the OOK signal can be ensured.

According to a fifth aspect, a communication method is provided. The communication method may be applied to a network device, or may be applied to a chip in a network device. The communication method may include the following steps: A network device generates an M-bit OOK signal, where M indicates a quantity of OOK symbols carried in each OFDM symbol, the OOK signal includes a plurality of OOK symbols, each OFDM symbol includes a first cyclic prefix or a second cyclic prefix, and the first cyclic prefix is shorter than the second cyclic prefix. The network device determines first information used for indicating or configuring a cyclic prefix type of the OFDM symbol in the OOK signal, where the cyclic prefix type includes the first cyclic prefix or the second cyclic prefix. The network device sends the first information to a terminal device, and sends the OOK signal to the terminal device. According to this method, the network device may send, to the terminal device in an indication or configuration manner, the first information used for indicating or configuring the cyclic prefix type of the OFDM symbol in the OOK signal. The terminal device may accurately determine the cyclic prefix type of the OFDM symbol in the received OOK signal based on the first information, and accurately remove a cyclic prefix of each OFDM symbol. Therefore, a network side can flexibly adjust a time domain resource for sending the OOK signal, to improve network resource utilization.

In a possible implementation of the fifth aspect, the first information is used for indicating or configuring an index of a start OFDM symbol in the OOK signal in a subframe or a slot in which the start OFDM symbol is located. The terminal device determines a cyclic prefix type of the start OFDM symbol based on the index, and by analogy, and determines a cyclic prefix type of another subsequent OFDM symbol. This effectively reduces indication overheads, and can accurately remove different cyclic prefixes during demodulation, so that no additional time deviation is introduced during demodulation.

In a possible implementation of the fifth aspect, the OOK signal includes a plurality of types of OOK signals. For example, the plurality of types of OOK signals may include a periodically sent synchronization signal, a periodically sent broadcast signal or an aperiodically sent synchronization signal, and/or a data signal. The data signal may include a wake-up signal that carries all or a part of paging content messages, a signal that carries wake-up information, another PDSCH signal, or the like.

In an implementation, the first information may be carried in the periodically sent synchronization signal or the periodically sent broadcast signal. The first information may be used for indicating or configuring a cyclic prefix type of an OFDM symbol of the aperiodically sent synchronization signal or a cyclic prefix type of an OFDM symbol of the data signal after the periodically sent synchronization signal or the periodically sent broadcast signal. In other words, the cyclic prefix type of the OFDM symbol of the aperiodically sent synchronization signal or the cyclic prefix type of the OFDM symbol of the data signal after the periodically sent synchronization signal or the periodically sent broadcast signal may be indicated or configured by using the periodically sent synchronization signal or the periodically sent broadcast signal.

In another implementation, the first information may be carried in an aperiodically sent synchronization signal that is last sent before the data signal. The first information may be used for indicating or configuring a cyclic prefix type of an OFDM symbol of the data signal. In other words, a cyclic prefix type of the data signal may be indicated or configured by using the aperiodically sent synchronization signal.

In a possible implementation of the fifth aspect, the first information is used for indicating or configuring a time interval between the plurality of types of OOK signals. For example, the time interval may be a time interval between a last OFDM symbol of a first type of OOK signal and a start OFDM symbol of a second type of OOK signal, and the first type of OOK signal and the second type of OOK signal are two of the plurality of types of OOK signals. According to this method, the time interval between the plurality of types of OOK signals is indicated or configured. During demodulation, a terminal side implicitly obtains cyclic prefix types of all OFDM symbols in the plurality of types of OOK signals, the terminal side can accurately remove cyclic prefixes with different lengths, and no additional time offset is introduced during demodulation, to ensure demodulation performance of the plurality of types of OOK signals.

In an example, the time interval may be a time interval between the periodically sent synchronization signal and the aperiodically sent synchronization signal. In another example, the time interval may be a time interval between the aperiodically sent synchronization signal and the data signal.

In a possible implementation of the fifth aspect, the first information may be used for indicating or configuring an index of a start OFDM symbol in the OOK signal in a subframe or a slot in which the start OFDM symbol is located. In other words, the first information may be used for indicating or configuring that the start OFDM symbol is a specific OFDM symbol in the OOK signal.

According to a sixth aspect, a communication method is provided. The communication method may be applied to a terminal device, or may be applied to a chip in a terminal device. The communication method may include the following steps: A terminal device receives first information sent by a network device, where the first information is used for indicating or configuring a cyclic prefix type of an OFDM symbol in an OOK signal, and the cyclic prefix type includes a first cyclic prefix or a second cyclic prefix. The terminal device receives an M-bit OOK signal sent by the network device, where M indicates a quantity of OOK symbols carried in each OFDM symbol, the OOK signal includes a plurality of OOK symbols, each OFDM symbol includes the first cyclic prefix or the second cyclic prefix, and the first cyclic prefix is shorter than the second cyclic prefix. The terminal device removes a cyclic prefix of each OFDM symbol from the OOK signal based on the first information, and then demodulates the OOK signal from which the cyclic prefix is removed. According to this method, the terminal device may receive the first information sent by the network device, accurately determine the cyclic prefix type of the OFDM symbol in the OOK signal based on the first information, and accurately remove the cyclic prefix of each OFDM symbol. In this way, when the OOK signal from which the cyclic prefix is removed is demodulated, demodulation performance of the terminal device can be ensured.

According to a seventh aspect, a communication apparatus is provided. The communication apparatus may be a network device, or may be a chip in a network device. The communication apparatus includes modules configured to perform the first aspect, the third aspect, or the fifth aspect, for example, a processing module and a transceiver module. The processing module may be a processor, and the transceiver module may be a transceiver.

According to an eighth aspect, a communication apparatus is provided. The communication apparatus may be a terminal device, or may be a chip in a terminal device. The communication apparatus includes modules configured to perform the second aspect, the fourth aspect, or the sixth aspect, for example, a processing module and a transceiver module. The processing module may be a processor, and the transceiver module may be a transceiver.

In the seventh aspect and the eighth aspect, when the communication apparatus is a terminal device or a network device, a transmitter and a receiver may be radio frequency modules; or when the communication apparatus is a chip in a terminal device or a network device, a transmitter and a receiver may be input/output interfaces, pins, circuits, or the like.

According to a ninth aspect, a communication apparatus is provided. The communication apparatus may be a network device, or may be a chip in a network device. The communication apparatus includes a memory, a processor, and a computer program that is stored in the memory and that can run on the processor. When executing the computer program, the processor may implement the communication method according to any one of the first aspect, the third aspect, or the fifth aspect.

According to a tenth aspect, a communication apparatus is provided. The communication apparatus may be a terminal device, or may be a chip in a terminal device. The communication apparatus includes a memory, a processor, and a computer program that is stored in the memory and that can run on the processor. When executing the computer program, the processor may implement the communication method according to any one of the second aspect, the fourth aspect, or the sixth aspect.

According to an eleventh aspect, a communication system is provided, including the communication apparatus according to the seventh aspect, the eighth aspect, the ninth aspect, or the tenth aspect. When the communication apparatus is a network device, the communication apparatus may implement the communication method according to any one of the first aspect, the third aspect, or the fifth aspect. When the communication apparatus is a terminal device, the communication apparatus may implement the communication method according to any one of the second aspect, the fourth aspect, or the sixth aspect.

According to a twelfth aspect, a computer-readable storage medium is provided. The computer storage medium stores computer instructions, and when the computer instructions are run on a computer device, the computer device is enabled to perform the foregoing related method steps, so as to implement the communication method according to any one of the first aspect to the sixth aspect.

According to a thirteenth aspect, a computer program product is provided, and when the computer program product runs on a computer, the computer is enabled to perform the foregoing related steps, so as to implement the communication method according to any one of the first aspect to the sixth aspect.

### BRIEF DESCRIPTION OF DRAWINGS

FIG. 1 is a diagram of an application scenario to which a communication method is applicable according to an embodiment of this application;
FIG. 2 is a diagram of a communication method according to an embodiment of this application;
FIG. 3 is a diagram of an implementation of a communication method according to an embodiment of this application;
FIG. 4 is a schematic flowchart of generating an OOK signal by a network device according to an embodiment of this application;
FIG. 5 is a diagram of a value change of X in a communication method according to an embodiment of this application;
FIG. 6 is a diagram of another communication method according to an embodiment of this application;
FIG. 7 is a diagram of still another communication method according to an embodiment of this application;
FIG. 8 is a diagram of a communication apparatus according to an embodiment of this application; and
FIG. 9 is a diagram of another communication apparatus according to an embodiment of this application.

### DESCRIPTION OF EMBODIMENTS

To clearly describe technical solutions in embodiments of this application, terms such as "first" and "second" are used in embodiments of this application to distinguish between same items or similar items that provide basically same functions or purposes. For example, a first cyclic prefix, a second cyclic prefix, and the like are merely used to distinguish cyclic prefixes with different lengths, and do not impose any other limitation on the cyclic prefixes.

It should be noted that in embodiments of this application, the term "example", "for example", or the like is used to represent giving an example, an illustration, or a description. Any embodiment or design solution described by using "example" or "for example" in embodiments of this application should not be explained as being more preferred or having more advantages than another embodiment or design solution. Exactly, use of the term "example", "for example", or the like is intended to present a related concept in a specific manner.

A service scenario described in embodiments of this application is intended to describe the technical solutions in embodiments of this application more clearly, but does not constitute a limitation on the technical solutions provided in embodiments of this application. A person of ordinary skill in the art may learn that as a new service scenario emerges, the technical solutions provided in embodiments of this application are also applicable to a similar technical problem.

In embodiments of this application, "at least one" means one or more, and "a plurality of" means two or more. A term "and/or" describes an association relationship between associated objects, and represents that three relationships may exist. For example, A and/or B may represent the following cases: Only A exists, both A and B exist, and only B exists, where A and B may be singular or plural. The character "/" generally indicates an "or" relationship between the associated objects. "At least one of the following items (pieces)" or a similar expression thereof indicates any combination of these items, including a single item (piece) or any combination of a plurality of items (pieces). For example, at least one item (piece) of a, b, or c may indicate: a, b, c, a and b, a and c, b and c, or a, b, and c, where a, b, and c may be singular or plural.

Steps in a communication method provided in embodiments of this application are merely examples. Not all steps are mandatory, or not all content in each step is mandatory. In a use process, addition or deletion may be performed as required.

A same step or steps or content having a same function in embodiments of this application may be mutually referenced in different embodiments.

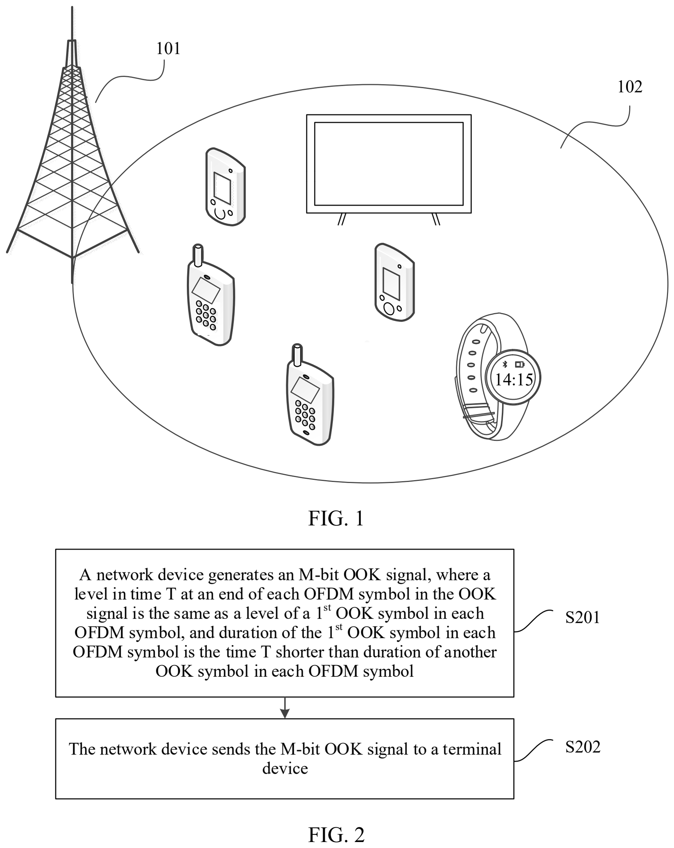

FIG. 1 is a diagram of an application scenario to which a communication method is applicable according to an embodiment of this application. The scenario may be a scenario in which an NR communication system is applied. For example, the scenario in which the NR communication system is applied may include a scenario in which a service such as an industrial wireless sensor, video surveillance, or a wearable device is applied.

The NR communication system may include a network device and a terminal device. The network device may be an entity that is configured to transmit or receive a signal on a network side, for example, a network device 101 in FIG. 1. In an example, the network device 101 in FIG. 1 may be a 5G base station (gNodeB, gNB). The terminal device may be an entity that is configured to receive or transmit a signal on a user side, for example, a terminal device 102 in FIG. 1. In an example, the terminal device in FIG. 1 may be a device such as an industrial network sensor, a video surveillance camera, a wearable device, a smart water meter, or an electric meter.

In this embodiment of this application, the terminal device in the NR communication system may be an NR terminal device having an auxiliary circuit module. The NR terminal device may receive, based on the auxiliary circuit module, a signal that presents an ON/OFF waveform in time domain, for example, an OOK signal. In an example, the terminal device may include a primary receiver and a secondary receiver, and the auxiliary circuit module may be a circuit module in the secondary receiver. In another example, the terminal device may alternatively include only a primary receiver, and the auxiliary circuit module may alternatively be a circuit module in the primary receiver.

For a WUS signal design, there may be a research based on sending a downlink WUS signal to the terminal device in an NR OFDM system, including generating, by the NR OFDM system, a WUS signal modulated through ASK/OOK.

In one manner, when receiving an OOK signal, a WUS receiver does not know whether cyclic prefixes (cyclic prefix, CP) included in a start OFDM symbol and a subsequent OFDM symbol in the OOK signal are long cyclic prefixes or short cyclic prefixes. In this case, the WUS receiver may determine a CP type of an OFDM symbol in two ways. In one way, the WUS receiver performs blind guessing on the CP of the start OFDM symbol. It is assumed that the CP of the start OFDM symbol is a long CP or a short CP, and then a CP type of the start OFDM symbol is assumed, and by analogy, whether a CP type of another subsequent OFDM symbol is a long CP or a short CP is deduced. However, because there is no prior information, the CP type of the start OFDM symbol assumed by the WUS receiver may be inconsistent with a CP type of a start OFDM symbol actually sent by the network device. For example, the start OFDM symbol of an OOK signal actually sent by the network device is an OFDM symbol with a long CP, but the WUS receiver assumes that the start OFDM symbol of the received OOK signal is an OFDM symbol with a short CP; or the start OFDM symbol of the OOK signal actually sent by the network device is an OFDM symbol with a short CP, but the WUS receiver assumes that the start OFDM symbol of the received OOK signal is an OFDM symbol with a long CP. Therefore, when removing the CP of the OFDM symbol, the WUS receiver cannot know whether to remove the CP based on a length of the long CP or a length of the short CP. Once the WUS receiver performs removing based on a short CP when receiving an OFDM symbol with a long CP, or performs removing based on a long CP when receiving an OFDM symbol with a short CP, an additional time offset is introduced. This greatly affects performance of the WUS receiver in demodulating the OOK signal.

In another way, the WUS receiver uses a demodulation method with low complexity. When demodulating a received OOK signal, the WUS receiver removes a CP of an OFDM symbol based only on a long CP or a short CP. However, because there are two possibilities for the CP of the OFDM symbol, if the CP of the OFDM symbol is removed based only on one CP length, a time offset is accumulated because lengths of removed CPs are inconsistent, and demodulation performance of the WUS receiver is affected.

In the application scenario shown in FIG. 1, when receiving an OOK signal, the terminal device may not know whether a cyclic prefix included in a start OFDM symbol in the OOK signal is a long cyclic prefix or a short cyclic prefix. Consequently, when demodulating the received OOK signal, the terminal device may perform removing randomly based on the long cyclic prefix or the short cyclic prefix. In this case, an additional time offset may be introduced on a receiving side, thereby causing a problem of greatly deteriorated demodulation performance. According to the communication method provided in this embodiment of this application, the problem may be resolved in any one of the following manners.
a. In an M-bit OOK signal sent by the network device, M indicates a quantity of OOK symbols carried in each orthogonal frequency division multiplexing OFDM symbol. In this embodiment, a bit in the M bits may also be replaced with a symbol (symbol), a modulation symbol, a chip (chip), a segment (segment), or a pulse (pulse). The OOK symbol in the OOK symbol may also be replaced with an OOK chip, an OOK segment, or an OOK pulse. A signal level of long time T at an end of each OFDM symbol is the same as a level of a 1^{st} OOK symbol in each OFDM symbol, and duration of the 1^{st} OOK symbol is the time T shorter than duration of another OOK symbol in each OFDM symbol. When receiving the M-bit OOK signal, the terminal device removes a cyclic prefix in an OFDM symbol based on a short cyclic prefix length, and then demodulates the OOK signal.
b. In a predefined manner, the network device predefines that a cyclic prefix included in a start OFDM symbol in an M-bit OOK signal is a long or short cyclic prefix. When receiving the OOK signal, the terminal device removes a cyclic prefix of an OFDM symbol based on cyclic prefix types included in the start OFDM symbol and a subsequent OFDM symbol that are in the predefined OOK signal, and then demodulates the OOK signal.
c. In an indication or configuration manner, the network device indicates or configures that a cyclic prefix included in a start OFDM symbol in an M-bit OOK signal is a long or short cyclic prefix. Information used for indicating or configuring a cyclic prefix type of an OFDM symbol in the OOK signal may be first information. When receiving the OOK signal, the terminal device determines, based on the first information, cyclic prefix types included in the start OFDM and a subsequent OFDM symbol in the OOK signal, to remove the cyclic prefix of the OFDM symbol, and then demodulates the OOK signal.

The following separately describes the foregoing solutions by using specific embodiments.

FIG. 2 is a diagram of a communication method according to an embodiment of this application. The method may include the following steps.

S201: A network device generates an M-bit OOK signal, where a level in time T at an end of each OFDM symbol in the OOK signal is the same as a level of a 1^{st} OOK symbol in each OFDM symbol, and duration of the 1^{st} OOK symbol in each OFDM symbol is the time T shorter than duration of another OOK symbol in each OFDM symbol.

The M-bit OOK signal includes a plurality of OOK symbols, and a value of M indicates a quantity of OOK symbols carried in each OFDM symbol of the OOK signal. After the value of M is determined, values of the M OOK symbols are determined. The values of the M OOK symbols may be values of ON or OFF of all OOK symbols. For example, the value of M may be 4, which indicates that each OFDM symbol carries four OOK symbols, and the four OOK symbols may be represented as [ON OFF ON OFF].

In this embodiment, a value of an OOK symbol may be a symbol 1 or a symbol 0, or may be a symbol ON or a symbol OFF. The symbol 1 or ON indicates that a level of the OOK symbol is a high level or symbol power is high, and the symbol 0 or OFF indicates that the level of the OOK symbol is a low level or the symbol power is low.

When the network device generates the M-bit OOK signal, each OFDM symbol in the OOK signal includes a cyclic prefix, and the cyclic prefix may be a first cyclic prefix CP 1 or a second cyclic prefix CP 2. Both the first cyclic prefix CP 1 and the second cyclic prefix CP 2 have a specific length, and the length of the first cyclic prefix CP 1 is shorter than the length of the second cyclic prefix CP 2. In other words, the first cyclic prefix CP 1 may be represented as a short cyclic prefix, and the second cyclic prefix CP 2 may be represented as a long cyclic prefix.

In this embodiment of this application, in the M-bit OOK signal generated by the network device, the level in the time T at the end of each OFDM symbol is the same as the level of the 1^{st} OOK symbol in each OFDM symbol. In addition, the duration of the 1^{st} OOK symbol in each OFDM symbol is the time T shorter than the duration of the another OOK symbol in each OFDM symbol. The time T is shorter than the duration of the another OOK symbol in each OFDM symbol.

For example, if the level of the 1^{st} OOK symbol in the OFDM symbol is ON, the level in the time T at the end of the OFDM symbol is ON; or if the level of the 1^{st} OOK symbol in the OFDM symbol is OFF, the level in the time T at the end of the OFDM symbol is OFF.

For example, the value of M is 4. Each OFDM symbol carries four OOK symbols, and other OOK symbols in each OFDM symbol may be a 2^{nd} OOK symbol, a 3^{rd} OOK symbol, and a 4^{th} OOK symbol. Duration of the other OOK symbols except the 1^{st} OOK symbol in each OFDM symbol is equal, in other words, when the value of M is 4, duration of the 2^{nd} OOK symbol, the 3^{rd} OOK symbol, and the 4^{th} OOK symbol in each OFDM symbol is equal. The duration of the 1^{st} OOK symbol is the time T shorter than the duration of the other OOK symbols in each OFDM symbol. Assuming that the duration of the other OOK symbols is T 0, the duration of the 1^{st} OOK symbol is time T 0-T.

S202: The network device sends the M-bit OOK signal to a terminal device.

The network device may send the generated M-bit OOK signal to the terminal device. When receiving the OOK signal, the terminal device needs to demodulate the OOK signal, to remove a cyclic prefix of each OFDM symbol.

In this embodiment of this application, when demodulating the OOK signal, the terminal device may remove the cyclic prefix of each OFDM symbol based on the first cyclic prefix, that is, the CP 1. Specifically, the terminal device may remove a time domain sampling point of a CP 1 length at a beginning of each OFDM symbol. Then, the terminal device may demodulate the M-bit OOK signal.

In a possible implementation of this embodiment of this application, the time T may be X times a difference between duration of the second cyclic prefix CP 2 and duration of the first cyclic prefix CP 1. Herein, X may be an integer greater than or equal to 0.

The difference between the duration of the second cyclic prefix CP 2 and the duration of the first cyclic prefix CP 1 may be represented as CP 2-CP 1. Therefore, the time T may be represented as T=X*(CP 2-CP 1).

In this way, in the M-bit OOK signal generated by the network device, a level of the duration X*(CP 2-CP 1) at the end of each OFDM symbol is the same as a level of the 1^{st} OOK symbol in each OFDM symbol. After a signal of time of the CP 2 or CP 1 at the end of each OFDM symbol is copied to a signal of time of a previous CP 2 or CP 1 of each OFDM symbol, when a signal of the time X*(CP 2-CP 1) at the end of each OFDM symbol and the 1^{st} OOK symbol are demodulated on a terminal device side, the signal of the time X*(CP 2-CP 1) at the end of each OFDM symbol and the 1st OOK symbol may be demodulated as the 1^{st} OOK symbol in each complete OFDM symbol.

According to the communication method provided in this embodiment of this application, the time T at the end of the OFDM symbol is equal to X times the time CP 2-CP 1, so that the terminal device only needs to perform removing based on a short cyclic prefix defined in an existing NR system. Therefore, removing a cyclic prefix by the terminal device with low complexity is implemented, and no additional time offset is introduced during demodulation, to ensure demodulation performance of the OOK signal.

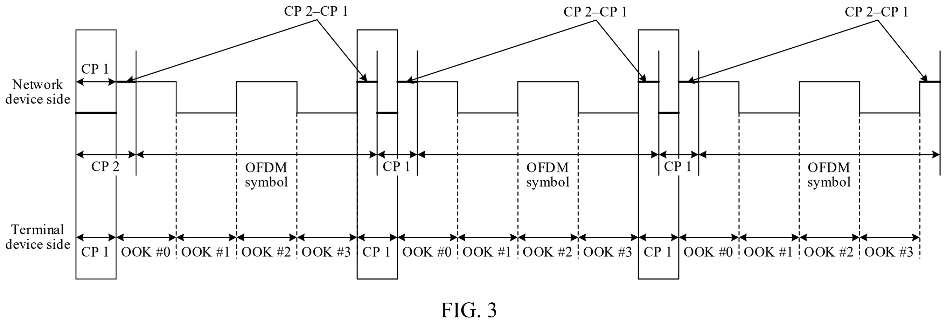

FIG. 3 is a diagram of an implementation of a communication method according to an embodiment of this application. Each OFDM symbol in FIG. 3 carries four OOK symbols, that is, an OOK #0, an OOK #1, an OOK #2, and an OOK #3 in FIG. 3. FIG. 3 is a diagram of a communication process between a network device and a terminal device when X=1. To be specific, when generating an M-bit OOK signal, the network device may keep a level of time CP 2-CP 1 at an end of each OFDM symbol in the OOK signal the same as a level of a 1^{st} OOK symbol in each OFDM symbol. For example, in FIG. 3, Both levels of time CP 2-CP 1 at an end of each OFDM symbol and a level of a 1^{st} OOK symbol in each OFDM symbol are ON. In this way, after the network device sends the M-bit OOK signal to the terminal device, the terminal device may use a time domain sampling point of a CP 1 length at a beginning of each OFDM symbol as a cyclic prefix to perform removing.

In a possible implementation of this embodiment of this application, the M-bit OOK signal generated by the network device may be generated in a discrete Fourier transform-spread-orthogonal frequency division multiplexing (discrete Fourier transform-spread-OFDM, DFT-S-OFDM) manner.

Specifically, after determining M OOK symbols carried in each OFDM symbol, the network device determines a value of M and values of ON and OFF of the M OOK symbols. For example, the network device determines that the value of M is equal to 4, and the M OOK symbols are [ON OFF ON OFF]. A bandwidth occupied by the OOK signal is N resource elements (resource element, RE). Based on a manner of generating DFT-S-OFDM of an M-bit OOK signal in the conventional technology, a sequence length included in an input signal before DFT is performed on DFT-S-OFDM is N, and a sequence length occupied by each OOK symbol is N/4. However, in this embodiment of this application, a sequence length occupied by a 1^{st} OOK symbol of each OFDM symbol is N/4-L, a sequence length occupied by another OOK symbol other than the 1^{st} OOK symbol is N/4 in each OFDM symbol, and a sequence length occupied by a symbol at the end of the OFDM symbol after the M OOK symbols is L. For a DFT-S-OFDM signal generation process, an input sequence before DFT is adaptively adjusted with a waveform change, to ensure that a target OOK signal waveform is generated in a relatively simplified manner.

In this embodiment of this application, an element of a sequence length L at an end of each OFDM symbol is the same as an element of a length L at a beginning or an end in another OOK symbol that has a same level as a 1^{st} OOK symbol in each OFDM symbol. Extendedly, the element of the sequence length L at the end of each OFDM symbol is the same as an element of any length L in another OOK symbol that has a same level as the 1^{st} OOK symbol in each OFDM symbol. A simple manner of determining a DFT input sequence can simplify computing complexity of generating the OOK signal by the network device.

A value of L may be equal to X times a ratio of duration of CP 2-CP 1 to duration of an OFDM symbol without a cyclic prefix multiplied by a sequence length included in a DFT input signal. In other words, L is equal to a ratio of time T to the duration of the OFDM symbol without the cyclic prefix multiplied by the sequence length occupied by the OOK signal.

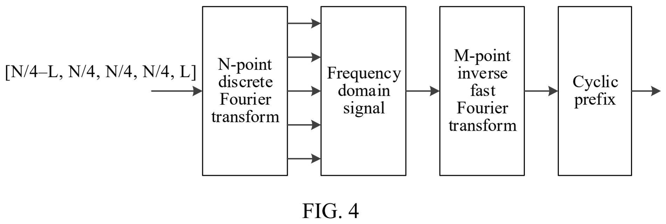

FIG. 4 is a schematic flowchart of generating an OOK signal by a network device according to an embodiment of this application. In FIG. 4, the network device generates an M-bit OOK signal in a DFT-S-OFDM manner. For example, a subcarrier spacing of an OFDM system is equal to 30 kHz, X=1, N=144, duration of CP 2-CP 1 is 0.5 µs, and duration of an OFDM symbol without a CP is 33.33 µs, and (CP 2-CP 1)/OFDM OS=0.015. In this case, a value of L is N*0.015, which is approximately equal to 2. In this case, a length of an input sequence for generating the M-bit OOK signal is [N/4-L, N/4, N/4, N/4, L].

Values of the first four lengths are corresponding to values of an ON or OFF sequence for sending four OOK symbols. A value of the last element, that is, an element of the length L, is ON or OFF, and is consistent with ON or OFF sent on the 1^{st} OOK symbol. The value may be L values in the ON or OFF sequence in the 1^{st} OOK symbol.

In a possible implementation of this embodiment of this application, when the network device generates the M-bit OOK signal, a level in time T at an end of each OFDM symbol is the same as a level of a 1^{st} OOK symbol in each OFDM symbol, and the time T is X times a difference between duration of a second cyclic prefix CP 2 and duration of a first cyclic prefix CP 1. A value of X is related to a type of a cyclic prefix included in a start OFDM symbol of the OOK signal.

Specifically, when the network device generates the OOK signal, when the OFDM symbol including the second cyclic prefix CP 2 is the start OFDM symbol of the OOK signal, X=1; or when the OFDM symbol including the first cyclic prefix CP 1 is the start OFDM symbol of the OOK signal, X=0. Herein, X=0 indicates that there is no level of a T-time signal at an end, and duration of a 1^{st} OOK symbol in each OFDM symbol is the same as duration of another OOK symbol in each OFDM symbol.

According to the communication method provided in this embodiment of this application, whether CP 2-CP 1 time needs to be accumulated in the time T at an end of a sent signal is determined based on whether a cyclic prefix of a start OFDM symbol is a long cyclic prefix. For the start OFDM symbol, if the cyclic prefix is a long cyclic prefix, the CP 2-CP 1 time starts to be accumulated in the time T at the end, or if the cyclic prefix is a short cyclic prefix, no accumulation is required at the beginning. In this manner, the sent signal is effectively and adaptively designed based on actual time domain allocation, and no additional time offset is introduced during demodulation, to ensure demodulation performance of the OOK signal.

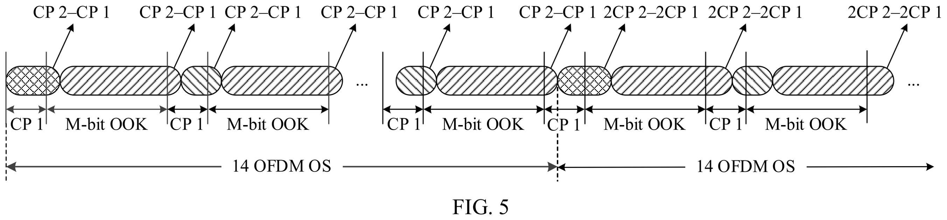

FIG. 5 is a diagram of a value change of X in a communication method according to an embodiment of this application. When a network device generates an OOK signal based on a value change of X shown in FIG. 5, starting from a 1^{st} OFDM symbol that includes a long cyclic prefix, that is, a second cyclic prefix CP 2, a value of X is 1, and corresponding time T is one time a difference between duration of the second cyclic prefix CP 2 and duration of a first cyclic prefix CP 1, that is, T=1*(CP 2-CP 1). Starting from a 2^{nd} OFDM symbol that includes a long second cyclic prefix CP 2, a value of X is 2, and corresponding time T is T=2*(CP 2-CP 1). The rest may be deduced by analogy.

A formula is used for representation, in other words, during generation of the OOK signal, when the OFDM symbol is a (1+k*7*2^{u})^{th} OFDM symbol, X is equal to X plus k for a start OFDM symbol of the OOK signal, where k is a positive integer.

Specifically, in the (1+7*2^{u})^{th} OFDM symbol, the value of X is increased by 1; in a (1+2*7*2^{u})^{th} OFDM symbol, the value of X continues to be increased by 1; and in a (1+3*7*2^{u})^{th} OFDM symbol, the value of X is increased by 1 again. In this way, when receiving the OOK signal, a terminal device may always remove a cyclic prefix of each OFDM symbol based on a short first cyclic prefix CP 1, and no time offset of an M-bit OOK signal is caused.

In this embodiment of this application, a value of µ in the foregoing formula is related to a subcarrier spacing corresponding to an OFDM symbol. Specifically, when the subcarrier spacing corresponding to the OFDM symbol is 15 kHz, µ=0; or when the subcarrier spacing corresponding to the OFDM symbol is 30 kHz, µ=1.

According to the communication method provided in this embodiment of this application, each OFDM symbol with a long cyclic prefix has additional CP 2-CP 1 time accumulated in the time T at an end, so that a receiving end is enabled to remove a cyclic prefix only based on a short cyclic prefix, and no additional time offset is introduced, to ensure demodulation performance of the OOK signal.

In this embodiment of this application, the network device may generate an M-bit OOK signal in the manner described in the foregoing embodiment, so that a level in time T at an end of each OFDM symbol is the same as a level of a 1^{st} OOK symbol in each OFDM symbol, and duration of the 1^{st} OOK symbol is the time T shorter than duration of another OOK symbol in each OFDM symbol. In this way, when the terminal device receives the M-bit OOK signal sent by the network device, regardless of whether a cyclic prefix included in each OFDM symbol in the OOK signal is a short first cyclic prefix CP 1 or a long second cyclic prefix CP 2, the terminal device may remove a cyclic prefix of each OFDM symbol from the OOK signal based on the first cyclic prefix CP 1, and then demodulate the OOK signal from which the cyclic prefix is removed. According to the communication method provided in this embodiment of this application, a WUS receiver in the terminal device does not need to know whether a start OFDM symbol of the received OOK signal is an OFDM symbol that includes a short first cyclic prefix CP 1 or an OFDM symbol that includes a long second cyclic prefix CP 2, and may remove a beginning of each OFDM symbol based on a length of the CP 1. According to this method, performance of demodulating the OOK signal by the terminal device is not reduced, and no additional time offset is introduced in a process of demodulating the OOK signal, so that demodulation performance of the OOK signal can be ensured.

An embodiment of this application further provides a communication method. The method may be applied to a terminal device, and the method includes:

The terminal device receives an M-bit OOK signal sent by a network device, where M indicates a quantity of OOK symbols carried in each OFDM symbol, the OOK signal includes a plurality of OOK symbols, a level in time T at an end of each OFDM symbol is the same as a level of a 1^{st} OOK symbol in each OFDM symbol, duration of the 1^{st} OOK symbol is the time T shorter than duration of another OOK symbol in each OFDM symbol, the time T is shorter than the duration of the another OOK symbol, each OFDM symbol includes a first cyclic prefix or a second cyclic prefix, and the first cyclic prefix is shorter than a second cyclic prefix.

The terminal device removes a cyclic prefix of each OFDM symbol from the OOK signal based on the first cyclic prefix. The terminal device demodulates the OOK signal from which the cyclic prefix is removed.

In this embodiment of this application, a terminal device side receives the OOK signal sent by the network device, and demodulates the OOK signal after removing a cyclic prefix of an OFDM symbol from the OOK signal based on a first cyclic prefix CP 1 with a short length. Because this embodiment of this application corresponds to the foregoing communication method embodiment on the network device side, for related details, refer to the descriptions in the foregoing embodiment. Details are not described herein again.

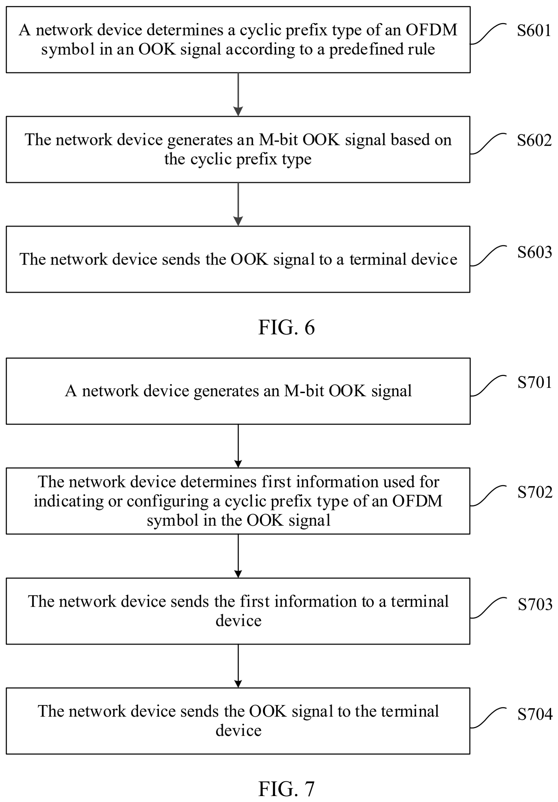

FIG. 6 is a diagram of another communication method according to an embodiment of this application. The method may include the following steps.

S601: A network device determines a cyclic prefix type of an OFDM symbol in an OOK signal according to a predefined rule.

In this embodiment of this application, the network device may determine a cyclic prefix type of each OFDM symbol in the OOK signal in a predefined manner. The cyclic prefix type may include a first cyclic prefix CP 1 or a second cyclic prefix CP 2, and a length of the first cyclic prefix CP 1 is shorter than a length of the second cyclic prefix CP 2.

The foregoing predefined rule may be determined by using a protocol between the network device and a terminal device, that is, the predefined rule may be written into a communication protocol. When the network device implements communication with the terminal device according to the communication protocol, the network device may determine, according to the predefined rule written into the communication protocol, whether a cyclic prefix type of each OFDM symbol in a to-be-generated OOK signal is a short first cyclic prefix CP 1 or a long second cyclic prefix CP 2.

S602: The network device generates an M-bit OOK signal based on the cyclic prefix type.

After determining the cyclic prefix type of each OFDM symbol in the OOK signal, the network device may generate the M-bit OOK signal based on the determined cyclic prefix type. A value of M indicates a quantity of OOK symbols carried in each OFDM symbol, and the M-bit OOK signal includes a plurality of OOK symbols.

S603: The network device sends the OOK signal to the terminal device.

The network device may send the generated M-bit OOK signal to the terminal device. Because the predefined rule is written into the communication protocol, when receiving the OOK signal, the terminal device may determine the cyclic prefix type of each OFDM symbol in the OOK signal according to the predefined rule. In other words, the terminal device may determine, according to the predefined rule, whether the cyclic prefix of each OFDM symbol is a short first cyclic prefix CP 1 or a long second cyclic prefix CP 2.

In this way, the terminal device may remove the cyclic prefix of each OFDM symbol from the OOK signal based on the cyclic prefix type determined in the predefined rule, and then demodulate the OOK signal from which the cyclic prefix is removed.

The cyclic prefix type of the OFDM symbol in the OOK signal is predefined in the predefined manner. During demodulation, a terminal side obtains cyclic prefix types of all OFDM symbols according to the predefined rule. The terminal side can accurately remove cyclic prefixes with different lengths, and no additional time offset is introduced during demodulation, to ensure demodulation performance of the OOK signal.

In an example, the network device may determine, according to the predefined rule, an index of a start OFDM symbol in the OOK signal in a subframe or a slot in which the start OFDM symbol is located, and may determine, based on the determined index, whether a start OFDM symbol in the to-be-generated OOK signal is a second cyclic prefix CP 2 with a long length or a first cyclic prefix CP 1 with a short length. For example, the start OFDM symbol in the determined OOK signal is a 1^{st} OFDM symbol in the subframe or the slot in which the start OFDM symbol is located. In this case, the cyclic prefix included in the start OFDM symbol in the OOK signal is a long second cyclic prefix, and a cyclic prefix included in a 2^{nd} OFDM symbol is a first cyclic prefix; a cyclic prefix included in an OFDM symbol before a (1+7*2^{u})^{th} OFDM symbol is a first cyclic prefix, and a cyclic prefix included in the (1+7*2^{u})^{th} OFDM symbol is a second cyclic prefix; and by analogy, a cyclic prefix included in a (1+k*7*2^{u})^{th} OFDM symbol is a second cyclic prefix, where k is a positive integer, and a cyclic prefix included in another OFDM symbol is a first cyclic prefix. Therefore, the terminal device may correspondingly perform removing based on a determined cyclic prefix length of each OFDM symbol. Then, the terminal device may demodulate the OOK signal from which the cyclic prefix is removed.

The terminal device determines a cyclic prefix type of the start OFDM symbol based on the index, and by analogy, and determines a cyclic prefix type of another subsequent OFDM symbol. This effectively reduces predefined overheads, and can accurately remove different cyclic prefixes during demodulation, so that no additional time deviation is introduced during demodulation.

In this embodiment of this application, the OOK signal generated by the network device may include a plurality of types of OOK signals. The plurality of types of OOK signals may include a periodically sent synchronization signal, a periodically sent broadcast signal, an aperiodically sent synchronization signal, and/or a data signal. The data signal may include a signal that carries all or a part of paging messages, a signal that carries wake-up information, another physical downlink shared channel (physical downlink shared channel, PDSCH) signal, or the like.

Therefore, in another possible implementation of this embodiment of this application, when determining the cyclic prefix type of the OFDM symbol in the OOK signal according to the predefined rule, the network device may also determine a time interval between the plurality of types of OOK signals according to the predefined rule. The time interval between the plurality of types of OOK signals is defined in a predefined manner. During demodulation, the terminal side implicitly obtains cyclic prefix types of all OFDM symbols in the plurality of types of OOK signals, the terminal side can accurately remove cyclic prefixes with different lengths, and no additional time offset is introduced during demodulation, to ensure demodulation performance of the plurality of types of OOK signals.

The time interval may be a time interval between a last OFDM symbol of a first type of OOK signal and a start OFDM symbol of a second type of OOK signal. The first type of OOK signal and the second type of OOK signal may be two of the plurality of types of OOK signals. In other words, the first type of OOK signal and the second type of OOK signal may be two of a periodically sent synchronization signal, a periodically sent broadcast signal, an aperiodically sent synchronization signal, and a data signal.

In an example of this embodiment of this application, the first type of OOK signal may be a periodically sent synchronization signal, and the second type of OOK signal may be an aperiodically sent synchronization signal. Therefore, the time interval may be a time interval between the periodically sent synchronization signal and the aperiodically sent synchronization signal. Specifically, the time interval may be a time interval between a last OFDM symbol of a periodically sent synchronization signal and a start OFDM symbol of a 1^{st} aperiodically sent synchronization signal after the periodically sent synchronization signal. Specifically, the time interval may be a time interval between the last OFDM symbol of the periodically sent synchronization signal and a start OFDM symbol of several aperiodically sent synchronization signals after the periodically sent synchronization signal, and a time interval between the several aperiodically sent synchronization signals may also be predefined.

In other words, when generating the OOK signal, the network device may determine, according to the predefined rule, the time interval between the last OFDM symbol of the periodically sent synchronization signal and the start OFDM symbol of the 1^{st} aperiodically sent synchronization signal after the periodically sent synchronization signal. When receiving the OOK signal sent by the network device, the terminal device may determine a cyclic prefix type of the start OFDM symbol in the OOK signal based on the time interval.

In another example of this embodiment of this application, the first type of OOK signal may be an aperiodically sent synchronization signal, and the second type of OOK signal may be a data signal. Therefore, the time interval may be a time interval between the aperiodically sent synchronization signal and the data signal. Specifically, the time interval may be a time interval between a last OFDM symbol of the aperiodically sent synchronization signal and a start OFDM symbol of a 1^{st} data signal after the aperiodically sent synchronization signal. Specifically, the time interval may be a time interval between the last OFDM symbol of the aperiodically sent synchronization signal and a start OFDM symbol of several non-data signals after the aperiodically sent synchronization signal, and a time interval between the several data signals may also be predefined.

In other words, when generating the OOK signal, the network device may determine, according to the predefined rule, the time interval between the last OFDM symbol of the aperiodically sent synchronization signal and the start OFDM symbol of the 1^{st} data signal after the aperiodically sent synchronization signal. When receiving the OOK signal sent by the network device, the terminal device may determine a cyclic prefix type of the start OFDM symbol in the OOK signal based on the time interval.

In a possible implementation of this embodiment of this application, the time interval between the plurality of types of OOK signals that is determined by the network device according to the predefined rule may be represented by a quantity of OFDM symbols. In other words, the network device may determine, according to the predefined rule, a quantity of OFDM symbols between the plurality of types of OOK signals.

In an example of this embodiment of this application, the network device may define, according to the predefined rule, that the time interval between the periodically sent synchronization signal and the aperiodically sent synchronization signal is N OFDM symbols. N is a positive integer. Specifically, the network device may define, according to the predefined rule, that the interval between the last OFDM symbol of the periodically sent synchronization signal and the start OFDM symbol of the 1^{st} aperiodically sent synchronization signal after the periodically sent synchronization signal is N OFDM symbols.

In another example of this embodiment of this application, the network device may define, according to the predefined rule, that the time interval between the aperiodically sent synchronization signal and the data signal is N OFDM symbols. Specifically, the network device may define, according to the predefined rule, that an interval between a last OFDM symbol of the aperiodically sent synchronization signal and a start OFDM symbol of a 1^{st} data signal after the aperiodically sent synchronization signal is N OFDM symbols.

In a possible implementation of this embodiment of this application, when determining the cyclic prefix type of the start OFDM symbol in the OOK signal according to the predefined rule, the network device may further determine that a symbol boundary of the start OFDM symbol in the OOK signal is aligned with a boundary of a slot or a subframe in which a start position of the OOK signal is located, or determine a quantity of OFDM symbols between the symbol boundary of the start OFDM symbol in the OOK signal and the boundary of the slot or the subframe boundary in which the start position of the OOK signal is located. In this manner, the network device may implicitly determine whether the cyclic prefix type of the start OFDM symbol in the OOK signal is a short first cyclic prefix CP 1 or a long second cyclic prefix CP 2. The time interval between the plurality of types of OOK signals is defined through predefining and based on a time interval for the boundary of the subframe or the slot, and a protocol definition is simple.

In the predefined manner, the network device may determine the cyclic prefix type of the OFDM symbol in the OOK signal. After the network device sends the OOK signal to the terminal device, the terminal device may also determine the cyclic prefix type of each OFDM symbol in the received OOK signal according to the predefined rule, and remove the cyclic prefix of each OFDM symbol from the OOK signal based on the determined cyclic prefix type. For example, the terminal device determines that the cyclic prefix included in the start OFDM symbol in the OOK signal is a second cyclic prefix. In this case, the terminal device determines that a cyclic prefix included in a 2^{nd} OFDM symbol is a first cyclic prefix; a cyclic prefix included in an OFDM symbol before a (1+7*2^{u})^{th} OFDM symbol is a first cyclic prefix, and the terminal device determines that a cyclic prefix included in the (1+7*2^{u})^{th} OFDM symbol is a second cyclic prefix; and by analogy, the terminal device determines that a cyclic prefix included in a (1+k*7*2^{u})^{th} OFDM symbol is a second cyclic prefix, where k is a positive integer, and determines that a cyclic prefix included in another OFDM symbol is a first cyclic prefix. Then, the terminal device may demodulate the OOK signal from which the cyclic prefix is removed. According to the communication method provided in this embodiment of this application, the terminal device may accurately know, according to the predefined rule, whether a cyclic prefix of each OFDM symbol in the OOK signal is a first cyclic prefix CP 1 or a second cyclic prefix CP 2. In this way, the terminal device can accurately remove the cyclic prefix of each OFDM symbol, and no time deviation caused when the cyclic prefix is removed is introduced, to ensure demodulation performance of the OOK signal.

In a possible implementation of this embodiment of this application, the network device may indicate or configure, based on a capability of demodulating and removing a CP by the terminal device that is reported by the terminal device, whether the terminal device performs removing only based on a short first cyclic prefix or based on a first cyclic prefix or a second cyclic prefix. If it is indicated or configured that the terminal performs removing only based on a short first cyclic prefix, refer to the foregoing implementation for the sent M-bit OOK signal. Details are not described herein again.

An embodiment of this application further provides a communication method. The method may be applied to a terminal device, and the method includes:

The terminal device receives an M-bit OOK signal sent by a network device, where M indicates a quantity of OOK symbols carried in each OFDM symbol, and the OOK signal includes a plurality of OOK symbols.

The terminal device determines a cyclic prefix type of each OFDM symbol according to a predefined rule, where each OFDM symbol includes a first cyclic prefix or a second cyclic prefix, and the first cyclic prefix is shorter than the second cyclic prefix.

The terminal device removes a cyclic prefix of each OFDM symbol from the OOK signal based on the cyclic prefix type.

The terminal device demodulates the OOK signal from which the cyclic prefix is removed.

In this embodiment of this application, a terminal device side receives the OOK signal sent by the network device, and demodulates the OOK signal after removing the cyclic prefix of the OFDM symbol from the OOK signal according to the predefined rule. This embodiment of this application corresponds to the foregoing embodiment of the communication method in which the network device side defines the cyclic prefix of the OFDM symbol in the OOK signal according to the predefined rule. For related details, refer to the descriptions in the foregoing embodiment. Details are not described herein again.

FIG. 7 is a diagram of still another communication method according to an embodiment of this application. The method may include the following steps.

S701: A network device generates an M-bit OOK signal.

In this embodiment of this application, the network device may notify, in an indication or configuration manner, a terminal device of a cyclic prefix type of each OFDM symbol in the received OOK signal.

In this embodiment of this application, the network device may generate the M-bit OOK signal in any manner. For example, the network device may generate the M-bit OOK signal in a DFT-S-OFDM manner or in another manner. The M-bit OOK signal may include a plurality of OOK symbols.

Herein, M indicates a quantity of OOK symbols carried in each OFDM symbol, each OFDM symbol includes a first cyclic prefix CP 1 or a second cyclic prefix CP 2, and a length of the first cyclic prefix CP 1 is shorter than a length of the second cyclic prefix CP 2.

S702: The network device determines first information used for indicating or configuring a cyclic prefix type of an OFDM symbol in the OOK signal.

In this embodiment of this application, when generating the M-bit OOK signal, the network device may determine the first information. The first information may be used for indicating or configuring the cyclic prefix type of the OFDM symbol in the OOK signal, and the cyclic prefix type may include the first cyclic prefix CP 1 or the second cyclic prefix CP 2. In other words, the first information may be used for indicating or configuring whether the cyclic prefix of the OFDM symbol in the OOK signal is a first cyclic prefix CP 1 or a second cyclic prefix CP 2.

S703: The network device sends the first information to the terminal device.

S704: The network device sends the OOK signal to the terminal device.

The network device may send the first information and the OOK signal to the terminal device. The terminal device may determine the cyclic prefix type of the OFDM symbol in the received OOK signal based on the received first information, and remove a cyclic prefix of each OFDM symbol from the OOK signal based on the first information; and then demodulate the OOK signal from which the cyclic prefix is removed. Therefore, a network side can flexibly adjust a time domain resource for sending the OOK signal, to improve network resource utilization.

For example, when generating the M-bit OOK signal, the network device may include the cyclic prefix type of the OFDM symbol in the OOK signal in the first information as a field. The network device may send the first information including the field to the terminal device. When receiving the OOK signal, the terminal device may determine the cyclic prefix type of the OFDM symbol based on the first information.

In an example, the network device may indicate or configure, by using the first information, an index of a start OFDM symbol in the OOK signal in a subframe or a slot in which the start OFDM symbol is located. Whether a start OFDM symbol in a to-be-generated OOK signal is a second cyclic prefix CP 2 with a long length or a first cyclic prefix CP 1 with a short length may be determined based on the determined index. For example, the terminal device determines that the cyclic prefix included in the start OFDM symbol in the OOK is a second cyclic prefix. In this case, the terminal device determines that a cyclic prefix included in a 2^{nd} OFDM symbol is a first cyclic prefix; a cyclic prefix included in an OFDM symbol before a (1+7*2^{u})^{th} OFDM symbol is a first cyclic prefix, and the terminal device determines that a cyclic prefix included in the (1+7* 2^{u})^{th} OFDM symbol is a second cyclic prefix; and by analogy, the terminal device determines that a cyclic prefix included in a (1+k*7*2^{u})^{th} OFDM symbol is a second cyclic prefix, where k is a positive integer, and determines that a cyclic prefix included in another OFDM symbol is a first cyclic prefix.

The terminal device determines the cyclic prefix type of the start OFDM symbol based on the index, and by analogy, and determines a cyclic prefix type of another subsequent OFDM symbol. This effectively reduces indication or configuration overheads, and can accurately remove different cyclic prefixes during demodulation, so that no additional time deviation is introduced during demodulation.

In this embodiment of this application, the OOK signal generated by the network device may include a plurality of types of OOK signals. The plurality of types of OOK signals may include a periodically sent synchronization signal, a periodically sent broadcast signal, an aperiodically sent synchronization signal, and/or a data signal. The data signal may include a signal that carries all or a part of paging messages, a signal that carries wake-up information, another PDSCH signal, or the like.

In this embodiment of this application, the first information used for indicating or configuring a cyclic prefix type of an OFDM symbol in the plurality of types of OOK signals may be carried in connected-state radio resource control (radio resource control, RRC) signaling or system information block SIBx, and the RRC signaling may be RRC release (Release) signaling. Specifically, the network device may use the connected-state RRC signaling or the system information block SIBx to indicate a cyclic prefix type of a start OFDM symbol in the plurality of types of OOK signals. The terminal device receives the RRC signaling or the SIBx by using a primary receiver.

In a possible implementation of this embodiment of this application, the first information may be carried in a periodically sent synchronization signal or a periodically sent broadcast signal. The first information may be used for indicating or configuring a cyclic prefix type of the aperiodically sent synchronization signal or the data signal.

Specifically, the first information may be carried in a periodically sent synchronization signal or a periodically sent broadcast signal, and the first information may be used for indicating or configuring a cyclic prefix type of an OFDM symbol of a 1^{st} aperiodically sent synchronization signal after the periodically sent synchronization signal or the periodically sent broadcast signal or a cyclic prefix type of an OFDM symbol of a 1^{st} data signal thereafter.

In another possible implementation of this embodiment of this application, the first information may be carried in an aperiodically sent synchronization signal, and the first information may be used for indicating or configuring the cyclic prefix type of the data signal. In other words, the network device may use, to carry the first information, an aperiodically sent synchronization signal that is last sent before the data signal, and indicate or configure a cyclic prefix type of an OFDM symbol of the data signal by using the first information.

Specifically, when sending the aperiodically sent synchronization signal and the data signal to the terminal device, the network device may carry the first information in a last aperiodically sent synchronization signal before the data signal is sent. When receiving the last aperiodically sent synchronization signal, the terminal device may determine a cyclic prefix type of an OFDM symbol of a data signal after the last aperiodically sent synchronization signal based on the first information carried in the last aperiodically sent synchronization signal. In this way, when receiving the data signal sent by the network device, the terminal device may determine, based on the first information, whether the cyclic prefix type of the OFDM symbol of the data signal is a first cyclic prefix CP 1 or a second cyclic prefix CP 2.

In a possible implementation of this embodiment of this application, the first information may be further used for indicating or configuring a time interval between the plurality of types of OOK signals. The time interval between the plurality of types of OOK signals is determined in an indication or configuration manner. During demodulation, a terminal side implicitly obtains cyclic prefix types of all OFDM symbols in the plurality of types of OOK signals, the terminal side can accurately remove cyclic prefixes with different lengths, and no additional time offset is introduced during demodulation, to ensure demodulation performance of the plurality of types of OOK signals.

The time interval may be a time interval between a last OFDM symbol of a first type of OOK signal and a start OFDM symbol of a second type of OOK signal. The first type of OOK signal and the second type of OOK signal may be two of the plurality of types of OOK signals. In other words, the first type of OOK signal and the second type of OOK signal may be two of a periodically sent synchronization signal, a periodically sent broadcast signal, an aperiodically sent synchronization signal, and a data signal.

In an example of this embodiment of this application, the first type of OOK signal may be a periodically sent synchronization signal, and the second type of OOK signal may be an aperiodically sent synchronization signal. Therefore, the time interval may be a time interval between the periodically sent synchronization signal and the aperiodically sent synchronization signal. Specifically, the time interval may be a time interval between a last OFDM symbol of a periodically sent synchronization signal and a start OFDM symbol of a 1^{st} aperiodically sent synchronization signal after the periodically sent synchronization signal.

In other words, when generating the OOK signal, the network device may indicate or configure, in the first information, the time interval between the last OFDM symbol of the periodically sent synchronization signal and the OFDM symbol of the 1^{st} aperiodically sent synchronization signal after the periodically sent synchronization signal. When receiving the periodic synchronization signal sent by the network device, the terminal device may determine, based on the time interval, a cyclic prefix type of an OFDM symbol in the aperiodically sent synchronization signal after the periodic synchronization signal.

In another example of this embodiment of this application, the first type of OOK signal may be an aperiodically sent synchronization signal, and the second type of OOK signal may be a data signal. Therefore, the time interval may be a time interval between the aperiodically sent synchronization signal and the data signal. Specifically, the time interval may be a time interval between a last OFDM symbol of the aperiodically sent synchronization signal and an OFDM symbol of a 1^{st} data signal after the aperiodically sent synchronization signal.

In other words, when generating the OOK signal, the network device may indicate or configure, in the first information, the time interval between the last OFDM symbol of the aperiodically sent synchronization signal and the OFDM symbol of the 1^{st} data signal after the aperiodically sent synchronization signal. When receiving the aperiodic synchronization signal sent by the network device, the terminal device may determine a cyclic prefix type of an OFDM symbol in a data signal after the aperiodic synchronization signal based on the time interval.

In a possible implementation of this embodiment of this application, the time interval between the plurality of types of OOK signals may be represented by a quantity of OFDM symbols. In other words, the first information sent by the network device to the terminal device may be used for indicating or configuring a quantity of OFDM symbols between the plurality of types of OOK signals.

In an indication or configuration manner, the network device may send, to the terminal device, the first information that carries the cyclic prefix type of the OFDM symbol in the OOK signal. After the network device sends the OOK signal to the terminal device, the terminal device may determine the cyclic prefix type of the start OFDM symbol in the received OOK signal based on the first information, and determine and remove a cyclic prefix of each OFDM symbol from the OOK signal based on the cyclic prefix type of the start OFDM symbol. For example, the cyclic prefix included in the start OFDM symbol in the OOK signal is a second cyclic prefix. In this case, a cyclic prefix included in a 2^{nd} OFDM symbol is a first cyclic prefix; a cyclic prefix included in an OFDM symbol before a (1+7*2^{u})^{th} OFDM symbol is a first cyclic prefix, and a cyclic prefix included in the (1+7*2^{u})^{th} OFDM symbol is a second cyclic prefix; and by analogy, a cyclic prefix included in a (1+k*7*2^{u})^{th} OFDM symbol is a second cyclic prefix, where k is a positive integer, and a cyclic prefix included in another OFDM symbol is a first cyclic prefix.

An embodiment of this application further provides a communication method. The method may be applied to a terminal device, and the method includes:

The terminal device receives first information sent by a network device, where the first information is used for indicating or configuring a cyclic prefix type of an OFDM symbol in an OOK signal, and the cyclic prefix type includes a first cyclic prefix or a second cyclic prefix.

The terminal device receives an M-bit OOK signal sent by the network device, where M indicates a quantity of OOK symbols carried in each OFDM symbol, the OOK signal includes a plurality of OOK symbols, each OFDM symbol includes the first cyclic prefix or the second cyclic prefix, and the first cyclic prefix is shorter than the second cyclic prefix.

The terminal device removes a cyclic prefix of each OFDM symbol from the OOK signal based on the first information.

The terminal device demodulates the OOK signal from which the cyclic prefix is removed.

In this embodiment of this application, a terminal device side receives the OOK signal sent by the network device, and demodulates the OOK signal after removing the cyclic prefix of the OFDM symbol from the OOK signal based on the first information. This embodiment of this application corresponds to the foregoing communication method embodiment in which the network device side sends, to the terminal device, indication information that carries the cyclic prefix type of the OFDM symbol in the OOK signal. For related details, refer to the descriptions in the foregoing embodiment. Details are not described herein again.

In embodiments of this application, division may be performed on functional modules of a network device or a terminal device based on the foregoing method examples. For example, each functional module may be obtained through division based on each corresponding function, or one or more functions may be integrated into one functional module. The integrated module may be implemented in a form of hardware, or may be implemented in a form of a software functional module. It should be noted that, in embodiments of this application, module division is an example, and is merely logical function division. In actual implementation, another division manner may be used. An example in which each functional module is obtained through division based on each corresponding function is used below for description.

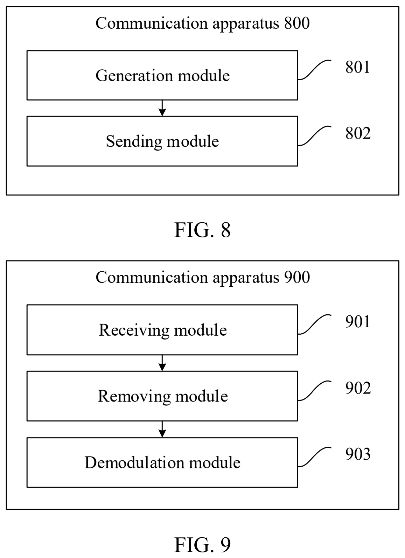

FIG. 8 is a diagram of a communication apparatus according to an embodiment of this application. The communication apparatus 800 may include a generation module 801 and a sending module 802.

The generation module 801 may be configured to generate an M-bit on-off keying OOK signal, where M indicates a quantity of OOK symbols carried in each orthogonal frequency division multiplexing OFDM symbol, the OOK signal includes a plurality of OOK symbols, a level in time T at an end of each OFDM symbol is the same as a level of a 1^{st} OOK symbol in each OFDM symbol, duration of the 1^{st} OOK symbol is the time T shorter than duration of another OOK symbol in each OFDM symbol, the time T is shorter than the duration of the another OOK symbol, each OFDM symbol includes a first cyclic prefix or a second cyclic prefix, and the first cyclic prefix is shorter than the second cyclic prefix.

The sending module 802 may be configured to send the OOK signal to a terminal device.

In a possible implementation of this embodiment of this application, the communication apparatus 800 may further include a determining module. The determining module may be configured to determine a cyclic prefix type of the OFDM symbol in the OOK signal according to a predefined rule. Correspondingly, the generation module 801 may be configured to generate the M-bit OOK signal based on the cyclic prefix type.

In another possible implementation of this embodiment of this application, the determining module may be configured to determine first information that is used for indicating or configuring the cyclic prefix type of the OFDM symbol in the OOK signal. Correspondingly, the sending module 802 may be configured to send the first information to the terminal device, and send the OOK signal to the terminal device.

FIG. 9 is a diagram of another communication apparatus according to an embodiment of this application. The communication apparatus 900 may include a receiving module 901, a removing module 902, and a demodulation module 903.

The receiving module 901 may be configured to receive an M-bit OOK signal sent by a network device, where M indicates a quantity of OOK symbols carried in each OFDM symbol, the OOK signal includes a plurality of OOK symbols, a level in time T at an end of each OFDM symbol is the same as a level of a 1^{st} OOK symbol in each OFDM symbol, duration of the 1^{st} OOK symbol is the time T shorter than duration of another OOK symbol in each OFDM symbol, the time T is shorter than the duration of the another OOK symbol, each OFDM symbol includes a first cyclic prefix or a second cyclic prefix, and the first cyclic prefix is shorter than the second cyclic prefix.

The removing module 902 may be configured to remove a cyclic prefix of each OFDM symbol from the OOK signal based on the first cyclic prefix.

The demodulation module 903 may be configured to demodulate the OOK signal from which the cyclic prefix is removed.

In a possible implementation of this embodiment of this application, the communication apparatus 900 may further include a determining module. The determining module may be configured to determine a cyclic prefix type of each OFDM symbol according to a predefined rule. Correspondingly, the removing module 902 may be configured to remove the cyclic prefix of each OFDM symbol from the OOK signal based on the cyclic prefix type determined according to the predefined rule.

In another possible implementation of this embodiment of this application, the receiving module 901 may be further configured to receive first information sent by the network device, where the first information is used for indicating or configuring a cyclic prefix type of an OFDM symbol in the OOK signal, and the cyclic prefix type includes the first cyclic prefix or the second cyclic prefix. Correspondingly, the removing module 902 may be configured to remove the cyclic prefix of each OFDM symbol from the OOK signal based on the first information.

All related content of each step in the foregoing method embodiments may be referenced to a function description of a corresponding functional module. Details are not described herein again.

In conclusion, the foregoing descriptions are merely specific implementations of this application, but are not intended to limit the protection scope of this application. Any variation or replacement within the technical scope disclosed in this application shall fall within the protection scope of this application.

## Claims

1. A communication method, wherein the method is applied to a network device, and comprises:
generating an M-bit on-off keying OOK signal, wherein M indicates a quantity of OOK symbols carried in each orthogonal frequency division multiplexing OFDM symbol, the OOK signal comprises a plurality of OOK symbols, a level in time T at an end of each OFDM symbol is the same as a level of a 1^{st} OOK symbol in each OFDM symbol, duration of the 1^{st} OOK symbol is the time T shorter than duration of another OOK symbol in each OFDM symbol, the time T is shorter than the duration of the another OOK symbol, each OFDM symbol comprises a first cyclic prefix or a second cyclic prefix, and the first cyclic prefix is shorter than the second cyclic prefix; and
sending the OOK signal to a terminal device.

2. The communication method according to claim 1, wherein the time T is X times a difference between duration of the second cyclic prefix and duration of the first cyclic prefix, and X is an integer greater than or equal to 0.

3. The communication method according to claim 2, wherein during generation of the OOK signal, when the OFDM symbol comprising the second cyclic prefix is a start OFDM symbol of the OOK signal, X=1, or when the OFDM symbol comprising the first cyclic prefix is a start OFDM symbol of the OOK signal, X=0.

4. The communication method according to claim 3, wherein during generation of the OOK signal, when the OFDM symbol is a (1+k*7*2^{u})^{th} OFDM symbol, X is equal to X plus k for the start OFDM symbol of the OOK signal, wherein k is a positive integer; and when a subcarrier spacing corresponding to the OFDM symbol is 15 kHz, µ=0, or when a subcarrier spacing corresponding to the OFDM symbol is 30 kHz, µ=1.

5. The communication method according to any one of claims 1 to 4, wherein the OOK signal is generated in a discrete Fourier transform-spread-orthogonal frequency division multiplexing DFT-S-OFDM manner, and during generation of the OOK signal, a sequence length occupied by the OOK signal is N, a sequence length occupied by the 1^{st} OOK symbol in each OFDM symbol is N/M-L, a sequence length occupied by the another OOK symbol in each OFDM symbol is N/M, and a sequence length occupied by a symbol at the end of each OFDM symbol is L.

6. The communication method according to claim 5, wherein a value of L is equal to a ratio of the time T to duration of an OFDM symbol without a cyclic prefix multiplied by the sequence length occupied by the OOK signal, and the cyclic prefix comprises the first cyclic prefix or the second cyclic prefix.

7. The communication method according to claim 5, wherein an element of the length L at the end of each OFDM symbol is the same as an element of a length L at a beginning or an end of another OOK symbol that has a same level as the 1^{st} OOK symbol in each OFDM symbol.

8. A communication method, wherein the method is applied to a terminal device, and comprises:
receiving an M-bit OOK signal sent by a network device, wherein M indicates a quantity of OOK symbols carried in each OFDM symbol, the OOK signal comprises a plurality of OOK symbols, a level in time T at an end of each OFDM symbol is the same as a level of a 1^{st} OOK symbol in each OFDM symbol, duration of the 1^{st} OOK symbol is the time T shorter than duration of another OOK symbol in each OFDM symbol, the time T is shorter than the duration of the another OOK symbol, each OFDM symbol comprises a first cyclic prefix or a second cyclic prefix, and the first cyclic prefix is shorter than the second cyclic prefix;
removing a cyclic prefix of each OFDM symbol from the OOK signal based on the first cyclic prefix; and
demodulating the OOK signal from which the cyclic prefix is removed.

9. A communication method, wherein the method is applied to a network device, and comprises:
determining a cyclic prefix type of an OFDM symbol in an OOK signal according to a predefined rule, wherein the cyclic prefix type comprises a first cyclic prefix or a second cyclic prefix, and the first cyclic prefix is shorter than the second cyclic prefix;
generating an M-bit OOK signal based on the cyclic prefix type, wherein M indicates a quantity of OOK symbols carried in each OFDM symbol, and the OOK signal comprises a plurality of OOK symbols; and
sending the OOK signal to a terminal device.

10. The communication method according to claim 9, wherein determining a cyclic prefix type of a start OFDM symbol in the OOK signal according to the predefined rule comprises:
determining, according to the predefined rule, an index of the start OFDM symbol in the OOK signal in a subframe or a slot in which the start OFDM symbol is located.

11. The communication method according to claim 9, wherein the OOK signal comprises a plurality of types of OOK signals, and determining the cyclic prefix type of the OFDM symbol in the OOK signal according to the predefined rule comprises:
determining a time interval between the plurality of types of OOK signals according to the predefined rule, wherein the plurality of types of OOK signals comprise a periodically sent synchronization signal, a periodically sent broadcast signal, an aperiodically sent synchronization signal, and/or a data signal.

12. The communication method according to claim 11, wherein the time interval is a time interval between a last OFDM symbol of a first type of OOK signal and a start OFDM symbol of a second type of OOK signal, and the first type of OOK signal and the second type of OOK signal are two of the plurality of types of OOK signals.

13. The communication method according to claim 11 or 12, wherein the time interval is a time interval between the periodically sent synchronization signal and the aperiodically sent synchronization signal.

14. The communication method according to claim 11 or 12, wherein the time interval is a time interval between the aperiodically sent synchronization signal and the data signal.

15. The communication method according to claim 11, wherein the time interval is represented by a quantity of OFDM symbols.

16. The communication method according to claim 10, wherein determining the cyclic prefix type of the start OFDM symbol in the OOK signal according to the predefined rule comprises:
determining, according to the predefined rule, that a symbol boundary of the start OFDM symbol in the OOK signal is aligned with a boundary of a slot or a subframe in which a start position of the OOK signal is located; or
determining, according to the predefined rule, a time interval between a symbol boundary of the start OFDM symbol in the OOK signal and a boundary of a slot or a subframe in which a start position of the OOK signal is located.

17. A communication method, wherein the method is applied to a terminal device, and comprises:
receiving an M-bit OOK signal sent by a network device, wherein M indicates a quantity of OOK symbols carried in each OFDM symbol, and the OOK signal comprises a plurality of OOK symbols;
determining a cyclic prefix type of each OFDM symbol according to a predefined rule, wherein each OFDM symbol comprises a first cyclic prefix or a second cyclic prefix, and the first cyclic prefix is shorter than the second cyclic prefix;
removing a cyclic prefix of each OFDM symbol from the OOK signal based on the cyclic prefix type; and
demodulating the OOK signal from which the cyclic prefix is removed.

18. A communication method, wherein the method is applied to a network device, and comprises:
generating an M-bit OOK signal, wherein M indicates a quantity of OOK symbols carried in each OFDM symbol, the OOK signal comprises a plurality of OOK symbols, each OFDM symbol comprises a first cyclic prefix or a second cyclic prefix, and the first cyclic prefix is shorter than the second cyclic prefix;
determining first information used for indicating or configuring a cyclic prefix type of the OFDM symbol in the OOK signal, wherein the cyclic prefix type comprises the first cyclic prefix or the second cyclic prefix;
sending the first information to a terminal device; and
sending the OOK signal to the terminal device.

19. The communication method according to claim 18, wherein the first information is used for indicating or configuring an index of a start OFDM symbol in the OOK signal in a subframe or a slot in which the start OFDM symbol is located.

20. The communication method according to claim 18 or 19, wherein the OOK signal comprises a plurality of types of OOK signals, the plurality of types of OOK signals comprise a periodically sent synchronization signal, a periodically sent broadcast signal or an aperiodically sent synchronization signal, and/or a data signal, and the first information is carried in connected-state RRC signaling or a system information block SIBx.

21. The communication method according to claim 20, wherein the first information is used for indicating or configuring a cyclic prefix type of an OFDM symbol of the aperiodically sent synchronization signal or a cyclic prefix type of an OFDM symbol of the data signal after the periodically sent synchronization signal or the periodically sent broadcast signal, and the first information is carried in the periodically sent synchronization signal or the periodically sent broadcast signal.

22. The communication method according to claim 20, wherein the first information is used for indicating or configuring a cyclic prefix type of an OFDM symbol of the data signal, and the first information is carried in the aperiodically sent synchronization signal that is last sent before the data signal.

23. The communication method according to claim 20, wherein the first information is used for indicating or configuring a time interval between the plurality of types of OOK signals.

24. The communication method according to claim 23, wherein the time interval is a time interval between a last OFDM symbol of a first type of OOK signal and a start OFDM symbol of a second type of OOK signal, and the first type of OOK signal and the second type of OOK signal are two of the plurality of types of OOK signals.

25. The communication method according to claim 23 or 24, wherein the time interval is a time interval between the periodically sent synchronization signal and the aperiodically sent synchronization signal.

26. The communication method according to claim 23 or 24, wherein the time interval is a time interval between the aperiodically sent synchronization signal and the data signal.

27. The communication method according to claim 23, wherein the time interval is represented by a quantity of OFDM symbols.

28. A communication method, wherein the method is applied to a terminal device, and comprises:
receiving first information sent by a network device, wherein the first information is used for indicating or configuring a cyclic prefix type of an OFDM symbol in an OOK signal, and the cyclic prefix type comprises a first cyclic prefix or a second cyclic prefix;
receiving an M-bit OOK signal sent by the network device, wherein M indicates a quantity of OOK symbols carried in each OFDM symbol, the OOK signal comprises a plurality of OOK symbols, each OFDM symbol comprises the first cyclic prefix or the second cyclic prefix, and the first cyclic prefix is shorter than the second cyclic prefix;
removing a cyclic prefix of each OFDM symbol from the OOK signal based on the first information; and
demodulating the OOK signal from which the cyclic prefix is removed.

29. A communication apparatus, comprising a module configured to perform the communication method according to any one of claims 1 to 28.

30. A communication apparatus, wherein the communication apparatus comprises a processor and a storage medium, the storage medium stores instructions, and when the instructions are run by the processor, the communication method according to any one of claims 1 to 28 is implemented.

31. A computer-readable storage medium, wherein the computer-readable storage medium comprises instructions, and when the instructions are run by a processor, the communication method according to any one of claims 1 to 28 is implemented.

32. A computer program product, wherein the computer program product comprises instructions, and when the instructions are run by a processor, the communication method according to any one of claims 1 to 28 is implemented.
